# EUROPEAN PATENT APPLICATION

(11) **EP 3 873 132 A1**
(43) Date of publication of application: **01.09.2021**
(21) Application number: 19887648.4
(22) Date of filing: 20.11.2019
(51) Int. Cl.: H04W 36/00

(54) **DATA COMMUNICATION METHOD AND APPARATUS**

(30) Priority: 20.11.2018 CN 201811380553
(71) Applicant: Huawei Technologies Co., Ltd., Longgang District Shenzhen, Guangdong 518129 (CN)
(72) Inventor: YU, Feng, Shenzhen, Guangdong 518129 (CN); LIN, Bo, Shenzhen, Guangdong 518129 (CN); XU, Changchun, Shenzhen, Guangdong 518129 (CN); SU, Qi, Shenzhen, Guangdong 518129 (CN)
(74) Representative: Maiwald Patent- und Rechtsanwaltsgesellschaft mbH
(86) International application number: PCT/CN2019/119748
(87) International publication number: WO 2020/103871

(57) **Abstract**

This application provides a data communication method and apparatus. The method includes: After a terminal device is handed over to a first base station, and the first base station receives data sent by a switch, the first base station generates second indication information. The second indication information is used to indicate a second base station to stop receiving the data sent by the switch. The first base station sends the second indication information to the second base station. After receiving a feedback acknowledgment of the second base station for the second indication information, the first base station sends, to the terminal device, the data sent by the switch. Therefore, this helps satisfy a requirement for packet transmission performance in a mobile network.

## Description

### TECHNICAL FIELD

This application relates to the wireless communications field, and in particular, to a data communication method and apparatus.

### BACKGROUND

In an industrial control scenario, data transmission between a controller and a controlled device may be completed through forwarding of a switch or wired direct connection. Wired communication has many obvious disadvantages, for example, high deployment costs, high maintenance costs, difficulty in reconfiguring a production line, and limited mobility. In contrast, wireless communication can resolve a problem in deployment and maintenance of the wired communication, reduce costs of deployment and maintenance, support higher mobility, provide a more flexible production line configuration, and the like. With rapid development of wireless communications technologies, as communication performance of the wireless communications technologies gradually approaches that of the wired communication (for example, a low latency and high-reliability performance), wireless communication is used in more application scenarios.

When a wireless base station is introduced into an industrial network, based on a current network architecture, a general method is that both the base station and a user plane anchor (serving gateway, SGW) may be directly connected to a switch, a controlled device is connected to the base station by using a wireless technology, and a controller is still connected to the switch in an existing wired manner.

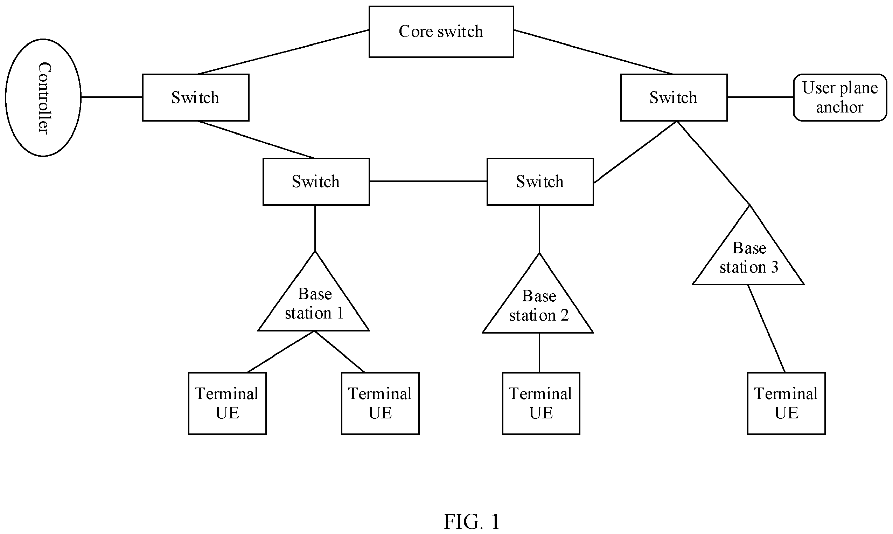

As shown in FIG. 1, because a user plane anchor SGW is a unique exit and entrance for user plane data in a cellular network to enter and exit an external network, it means that data sent by a controller needs to arrive at the SGW through a switch network, and then forwarded by the SGW to user equipment (user equipment, UE) according to an internal addressing mechanism of the cellular network. Similarly, data of the UE needs to be sent to the SGW through a base station and the switch network, and then sent by the SGW to the controller through the switch network. Originally, the controller and the user equipment UE may directly transmit data through the switch network. However, due to existence of the user plane anchor SGW, all data needs to be sent to the SGW, and then forwarded by the SGW. Due to the existence of the SGW, the data needs to pass through many redundant transmission paths, and consequently, a latency is increased. Due to the existence of the user plane anchor SGW, a data transmission latency is increased. However, if the user plane anchor is directly removed, when the UE is handed over from a source-base-station side to a target-base-station side, because the controller is not in a cellular system, the base station does not notify the controller that a path has changed, downlink data of the controller is still sent to a source base station based on the previous path, and the source base station then forwards a data packet to a target base station. As a result, downlink path switching cannot be completed.

### SUMMARY

This application provides a data communication method and apparatus, so that when there is no user plane anchor, after a terminal device is handed over between base stations, data forwarding processing can be implemented by using a switch, thereby further reducing a data transmission latency.

According to a first aspect, this application provides a data communication method. The method includes:
After a terminal device is handed over to a first base station, and the first base station receives data sent by a switch, the first base station generates second indication information. The second indication information is used to indicate a second base station to stop receiving the data sent by the switch.

The first base station sends the second indication information to the second base station.

After receiving a feedback acknowledgment that is sent by the second base station and that is for the second indication information, the first base station sends, to the terminal device, the data sent by the switch.

According to a second aspect, this application provides a data communication method. The method includes: When a terminal device is handed over to a first base station, a switch obtains first indication information. The first indication information is used to indicate that the terminal device is handed over to the first base station. The switch sends data to the first base station.

According to a third aspect, this application provides a data communications apparatus. The apparatus includes:
a processing unit, configured to: after a terminal device is handed over to a first base station, and the first base station receives data sent by a switch, generate second indication information, where the second indication information is used to indicate a second base station to stop receiving the data sent by the switch; and
a transceiver unit, configured to: send the second indication information to the second base station; and send, to the terminal device based on a feedback acknowledgment of the second base station for the second indication information, the data sent by the switch.

According to a fourth aspect, this application provides a data communications apparatus. The apparatus includes:
a processing unit, configured to: when a terminal device is handed over to a first base station, obtain first indication information, where the first indication information is used to indicate that the terminal device is handed over to the first base station; and
a transceiver unit, configured to send data to the first base station.

According to a fifth aspect, this application provides a data communications apparatus. The apparatus includes:
a processor, configured to: after a terminal device is handed over to a first base station, and the first base station receives data sent by a switch, generate second indication information, where the second indication information is used to indicate a second base station to stop receiving the data sent by the switch; and
a transceiver, configured to: send the second indication information to the second base station; and send, to the terminal device based on a feedback acknowledgment of the second base station for the second indication information, the data sent by the switch.

According to a sixth aspect, this application provides a data communications apparatus. The apparatus includes:
a processor, configured to: when a terminal device is handed over to a first base station, obtain first indication information, where the first indication information is used to indicate that the terminal device is handed over to the first base station; and
a transceiver, configured to send data to the first base station.

According to a seventh aspect, this application provides a computer-readable storage medium. The computer-readable storage medium stores instructions. When the instructions are run on a computer, the computer is enabled to perform the method in any one of the first aspect or the possible implementations of the first aspect, or the computer is enabled to perform the method in any one of the second aspect or the possible implementations of the second aspect.

According to a ninth aspect, this application provides a chip, including a memory and a processor. The memory is configured to store a computer program, and the processor is configured to invoke the computer program from the memory and execute the computer program, to perform the method in any one of the first aspect or the possible implementations of the first aspect, or enable a computer to perform the method in any one of the second aspect or the possible implementations of the second aspect.

Optionally, the chip includes only a processor. The processor is configured to read and execute a computer program stored in a memory. When the computer program is executed, the processor performs the method in any one of the second aspect or the possible implementations of the second aspect.

According to an eleventh aspect, this application provides a computer program product. The computer program product includes computer program code. When the computer program code is run on a computer, the computer is enabled to perform the method in any one of the first aspect or the possible implementations of the first aspect, or the computer is enabled to perform the method in any one of the second aspect or the possible implementations of the second aspect.

Optionally, the memory and the memory may be physically independent units, or the memory and the processor may be integrated together.

### BRIEF DESCRIPTION OF DRAWINGS

FIG. 1 shows an industrial network framework to which a cellular system is introduced in the conventional technology;
FIG. 2A and FIG. 2B show a basic process of industrial network communication;
FIG. 3A and FIG. 3B are a schematic flowchart of a first embodiment of a communication method according to this application;
FIG. 4A and FIG. 4B are a schematic flowchart of a second embodiment of the communication method according to this application;
FIG. 5A and FIG. 5B are a schematic flowchart of a third embodiment of the communication method according to this application;
FIG. 6A and FIG. 6B are a schematic flowchart of a fourth embodiment of the communication method according to this application;
FIG. 7A and FIG. 7B are a schematic flowchart of a fifth embodiment of the communication method according to this application;
FIG. 8A and FIG. 8B are a schematic flowchart of a sixth embodiment of the communication method according to this application;
FIG. 9 is a schematic structural diagram of a communications apparatus according to this application; and
FIG. 10 is a schematic structural diagram of another communications apparatus according to this application.

### DESCRIPTION OF EMBODIMENTS

The following describes technical solutions of this application with reference to the accompanying drawings. It is clear that embodiments described below are merely some but not all of embodiments of this application. All other embodiments obtained by a person of ordinary skill in the art based on the embodiments of this application without creative efforts shall fall within the protection scope of this application.

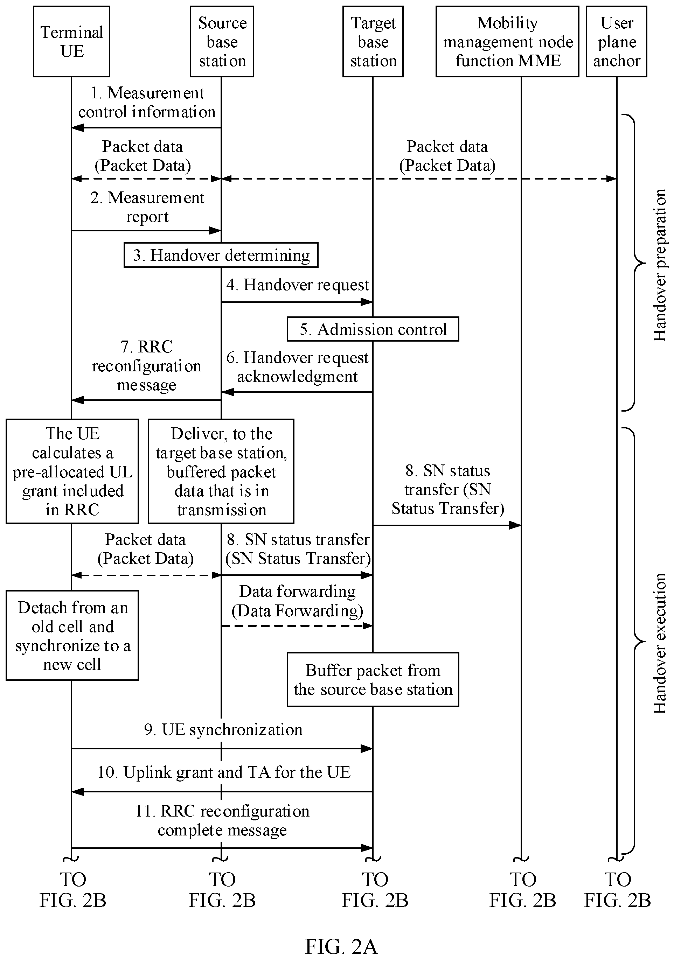

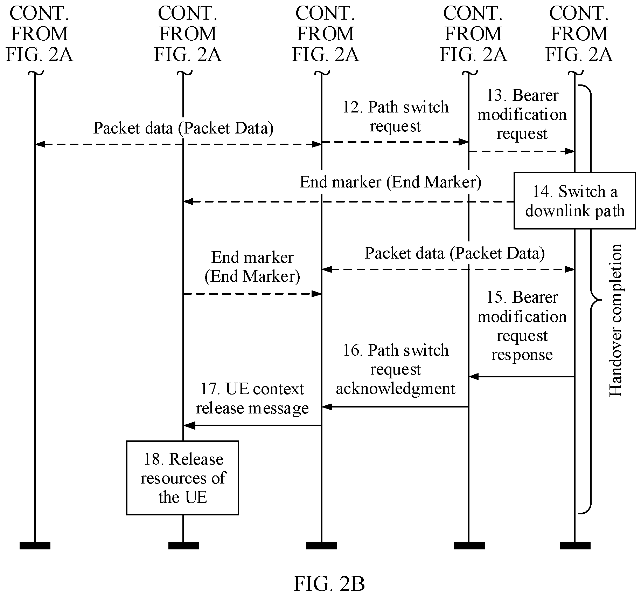

FIG. 2A and FIG. 2B are a schematic flowchart of a data communication method that includes a user plane anchor. As shown in FIG. 2A and FIG. 2B, the communication method mainly includes the following steps.
(1) A source base station sends measurement configuration information to a terminal device UE.
(2) The terminal device UE performs neighboring cell measurement based on the measurement configuration information, and reports a measurement report to the source base station.
(3) The source base station determines whether to initiate a handover based on the measurement report.
(4) The source base station sends a handover request to a target base station, where the handover request may include quality of service (quality of service, QoS) information of each bearer.
(5) The target base station performs admission control based on the QoS information of each bearer and resources of the target base station.
(6) The target base station sends a handover request acknowledgment message to the source base station, where the handover request acknowledgment message carries a handover command.
(7) The source base station transparently sends the handover command to the terminal device UE by using an RRC reconfiguration message.
(8) The source base station sends an SN Status Transfer to the target base station, where the SN Status Transfer includes transmission statuses of PDCP SDUs (including a PDCP SDU in uplink transmission and a PDCP SDU in downlink transmission) corresponding to each SN, and the source base station starts to forward data of the UE to the target base station.
(9) The UE receives the handover command, synchronizes with the target base station, and initiates a random access process.
(10) The UE receives an RAR message sent by the target base station, and obtains an uplink grant and TA.
(11) The UE sends an RRC reconfiguration complete message to the target base station, and starts to transmit uplink data.
(12) The target base station sends a Path Switch Request message to an MME, to notify that the UE has been handed over to the target base station.
(13) The MME sends a bearer modification request to an SGW, to notify the SGW that the UE has been handed over to the target base station.
(14) The SGW starts to forward downlink data of the UE to the target base station based on the uplink data of the UE. The SGW sends one or more end makers (where one end maker message may be sent for each bearer) to the source base station, to indicate that forwarding of the downlink data to the source base station is completed, and subsequent downlink data is no longer forwarded to the source base station.
(15) The SGW sends a bearer modification response to the MME, to notify the MME that downlink path switching is completed.
(16) The MME sends a Path Switch Request Ack to the target base station, to notify the target base station that the downlink path switching is completed.
(17) The target base station sends a UE context release message to the source base station.
(18) The source base station releases related resources of the UE.

Based on the foregoing communication process, the following describes a data communication method of this application, to reduce a data transmission latency. In addition, a distributed handover solution without a user plane anchor is designed, to resolve a problem, occurring after UE is handed over, in downlink path updating.

A first embodiment of this application provides a data communication method. The method may be performed by a source base station, a target base station, or a switch.

An embodiment of this application provides a method flowchart, including:
After a terminal device is handed over to a first base station, and the first base station receives data sent by a switch, the first base station generates second indication information. The second indication information is used to indicate a second base station to stop receiving the data sent by the switch.

The first base station sends the second indication information to the second base station.

After receiving a feedback acknowledgment of the second base station for the second indication information, the first base station sends, to the terminal device, the data sent by the switch.

The first base station is a target base station, and the second base station is a source base station.

Further, the method includes the following steps.

The first base station generates first indication information. The first indication information is used to indicate that the terminal device is handed over to the first base station.

The first base station sends the first indication information to the switch.

Further, the method includes the following steps.

The first base station receives data of the terminal device.

The first base station determines, based on identification information of the terminal device, to send the data of the terminal device to the switch.

The first base station sends the data of the terminal device to the switch.

Further, the method includes the following step.

The first base station obtains, based on identification ID information of the terminal device, a MAC address that is of the terminal device and that corresponds to the identification information of the terminal device.

Further, the method includes the following step.

The first base station establishes a routing table based on the MAC address of the terminal device. The routing table includes a correspondence between the MAC address of the terminal device and a destination MAC address of the first base station.

This embodiment of this application further provides a data communication method. The method includes the following steps.

When a terminal device is handed over to a first base station, a switch obtains first indication information. The first indication information is used to indicate that the terminal device is handed over to the first base station.

The switch sends data to the first base station.

Further, the method includes the following step.

The switch receives data of the terminal device.

Further, the method includes the following step.

The switch obtains, based on identification ID information of the terminal device, a MAC address that is of the terminal device and that corresponds to the identification information of the terminal device.

Further, the method includes the following step.

The switch establishes a routing table based on the MAC address of the terminal device. The routing table includes a correspondence between the MAC address of the terminal device and a destination MAC address of the first base station.

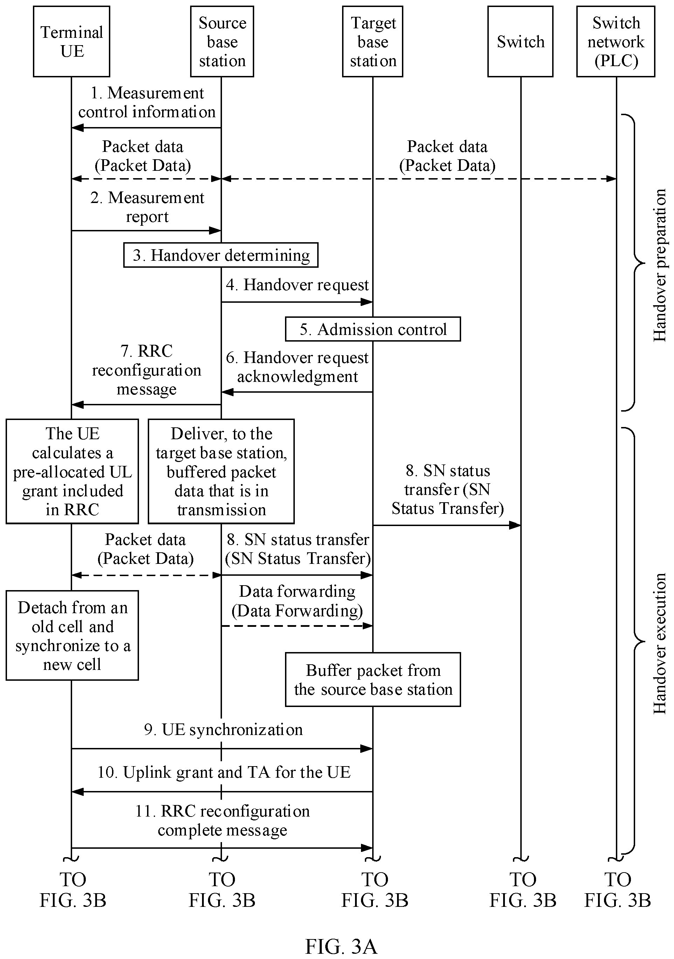

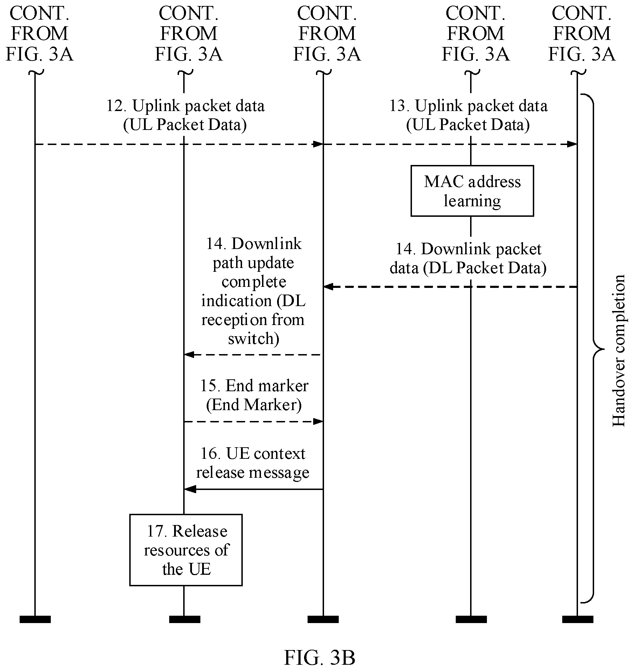

When the execution body is a source base station, referring to FIG. 3A and FIG. 3B, the foregoing method may include at least the following steps.

301: A source base station sends measurement configuration information to a terminal device UE.

The terminal device UE performs neighboring cell measurement based on the measurement configuration information, and reports a measurement report to the source base station.

302: The source base station determines, based on the measurement report reported by the terminal device UE and radio resource management (radio resource management, RRM) information, whether to initiate a handover.

If the source base station determines to initiate a handover, the following method steps continue to be performed.

303: The source base station sends a handover request to a target base station, where the handover request includes some configuration information for a bearer of a data packet.

It should be noted that the data packet may be an Ethernet data packet or an IP network data packet, and is related to a type of an external network to which the data packet is to be transmitted.

In addition, the configuration information includes but is not limited to quality of service (quality of service, QoS) information, a UE local area network address (media access control address, MAC), indication information (for example, a packet data convergence protocol (packet data convergence protocol, PDCP) header compression algorithm) of an Ethernet data bearer, an Ethernet protocol type corresponding to an Ethernet data bearer, and the like.

304: The source base station sends, to the UE based on a handover acknowledgment message sent by the target base station, a radio resource control layer (radio resource control, RRC) reconfiguration message including a handover command.

It should be noted that the target base station performs admission control based on QoS information in configuration information of each bearer and resources of the target base station, and determines to accept the handover request. Then, the target base station sends a handover acknowledgment message to the source base station, where the handover acknowledgment message carries the handover command.

305: The source base station sends an SN Status Transfer to the target base station, and starts to forward data to the target base station, where the data is forwarded by reusing a manner in which forwarding is performed by using a GTP (General Packet Radio Service Tunnelling Protocol, GTP for short) tunnel in current LTE.

The SN Status Transfer includes transmission statuses of PDCP SDUs, including a PDCP SDU in uplink transmission and a PDCP SDU in downlink transmission, corresponding to each SN.

First, the UE receives the handover command, synchronizes with the target base station, and initiates a random access process. Then, the UE receives an RAR message sent by the target base station, and obtains an uplink grant and TA. Then, the UE sends an RRC reconfiguration complete message to the target base station, and may start to transmit uplink data. Finally, the UE performs path updating by using an uplink service data packet. When there is no uplink service data packet, the UE generates an uplink path update data packet, and sends the uplink path update data packet to the target base station together with the RRC reconfiguration complete message.

The uplink path update data packet may be an ARP packet, a broadcast packet, a unicast packet, or the like on an Ethernet.

Optionally, the uplink path update data packet may alternatively be sent to the target base station after the RRC reconfiguration complete message is sent.

306: After receiving path update indication information sent by the target base station, the source base station starts a timer, and sends an end maker to the target base station after the timer expires, to indicate that forwarding of a downlink data packet is completed.

A switch network completes path updating based on the "uplink service data packet" or the "uplink path update data packet" forwarded by the target base station. The downlink data packet is directly sent to the target base station through a new path. When receiving the downlink data packet sent by using the switch network, the target base station sends the path update indication information to the source base station, to indicate that downlink path updating is completed.

Optionally, the timer may be a set time threshold, and the time threshold may be an empirical value. When the timer expires, it may be considered that sending of the data forwarded by the source base station to the target base station is completed.

Optionally, the timer may include a trigger structure. If new downlink data forwarded by the source base station arrives in the target base station in a timer starting process, the timer may be restarted.

It should be understood that, during actual application, another manner may also be used to determine whether sending of the forwarded data is completed. A specific manner is not limited herein.

307: The source base station releases related resources of the UE based on a UE context release message sent by the target base station.

When the execution body is the target base station, referring to FIG. 2A and FIG. 2B, the handover method that is in an extremely simplified network architecture and that is provided in the first embodiment of this application may include at least the following steps.

311: The target base station receives the handover request sent by the source base station, where the handover request includes the configuration information for the bearer of the data packet.

First, the source base station sends the measurement configuration information to the terminal device UE. Then, the UE performs neighboring cell measurement based on the measurement configuration information, and reports the measurement report to the source base station. Then, the source base station determines, based on the measurement report reported by the UE and the RRM information, whether to initiate the handover. Finally, the source base station sends the handover request to the target base station, where the handover request includes the configuration information for the bearer of the data packet.

The data packet may be an Ethernet data packet or an IP network data packet, and is related to a type of an external network to which the data packet is to be transmitted.

The configuration information includes but is not limited to quality of service (Quality of Service, QoS for short) information, a UE local area network address (Media Access Control Address, MAC for short), indication information (for example, a packet data convergence protocol (Packet Data Convergence Protocol, PDCP for short) header compression algorithm) of an Ethernet data bearer, an Ethernet protocol type corresponding to an Ethernet data bearer, and the like.

312: The target base station performs admission control based on the QoS information in the configuration information of each bearer of the data packet and the resources of the target base station, and determines to accept the handover request.

313: The target base station sends the handover acknowledgment message to the source base station, where the handover acknowledgment message carries the handover command.

The source base station transparently sends the handover command to the UE by using the RRC reconfiguration message.

314: The target base station receives the SN Status Transfer sent by the source base station, and starts to receive the data forwarded by the source base station, where the data is forwarded by reusing a manner in which forwarding is performed by using a GTP tunnel in current LTE.

The SN Status Transfer includes transmission statuses of PDCP SDUs, including a PDCP SDU in uplink transmission and a PDCP SDU in downlink transmission, corresponding to each SN.

The UE receives the handover command, synchronizes with the target base station, and initiates the random access process.

315: The target base station sends the RAR message to the UE, receives the RRC reconfiguration complete message sent by the UE, and starts to transmit the uplink data.

First, the UE receives the RAR message sent by the target base station, and obtains the uplink grant and the TA. Then, the UE sends the RRC reconfiguration complete message to the target base station, and may start to transmit the uplink data. Then, the UE performs path updating by using the uplink service data packet. When there is no uplink service data packet, the UE generates the uplink path update data packet, and sends the uplink path update data packet to the target base station together with the RRC reconfiguration complete message.

The uplink path update data packet may be an ARP packet, a broadcast packet, a unicast packet, or the like on an Ethernet.

Optionally, the uplink path update data packet may alternatively be sent to the target base station after the RRC reconfiguration complete message is sent.

316: The target base station forwards the "uplink service data packet" or the "uplink path update data packet" generated by the UE to the switch network.

The switch network completes path updating based on the "uplink service data packet" or the "uplink path update data packet" forwarded by the target base station.

317: When receiving the downlink data packet sent by using the switch network, the target base station sends the path update indication information to the source base station, to indicate that downlink path updating is completed.

The switch network completes path updating based on the "uplink service data packet" or the "uplink path update data packet" forwarded by the target base station. The downlink data packet is directly sent to the target base station through the new path. When receiving the downlink data packet sent by using the switch network, the target base station sends the path update indication information to the source base station, to indicate that downlink path updating is completed.

After receiving the path update indication information sent by the target base station, the source base station starts the timer, and sends the end maker to the target base station after the timer expires, to indicate that forwarding of the downlink data packet is completed.

Optionally, the timer may be a set time threshold, and the time threshold may be an empirical value. When the timer expires, it may be considered that sending of the data forwarded by the source base station to the target base station is completed.

Optionally, the timer may include the trigger structure. If new downlink data forwarded by the source base station arrives in the target base station in the timer starting process, the timer may be restarted.

It should be understood that, during actual application, another manner may also be used to determine whether sending of the forwarded data is completed. A specific manner is not limited herein.

318: The target base station sends the UE context release message to the source base station.

The source base station releases the related resources of the UE based on the UE context release message sent by the target base station.

Compared with the conventional technology, the first embodiment provides a new network architecture in which a user plane anchor is removed, so that a data transmission latency is reduced. In addition, a distributed handover solution without a user plane anchor in the new network architecture is designed, so that the UE actively sends an uplink user plane message such as the "uplink service data packet" or the "uplink path update data packet" after the path switching is completed, to help the switch network complete the downlink path updating. In addition, hitless switching is completed by using the path update indication information of the target base station and the end maker that is based on the timer of the source base station, to avoid a packet loss at the source base station.

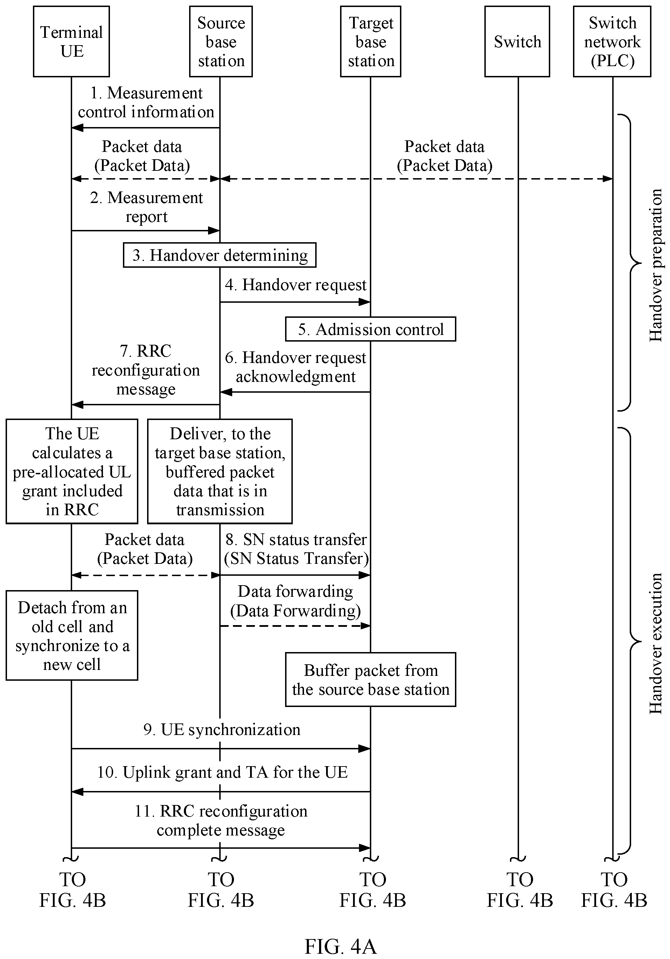

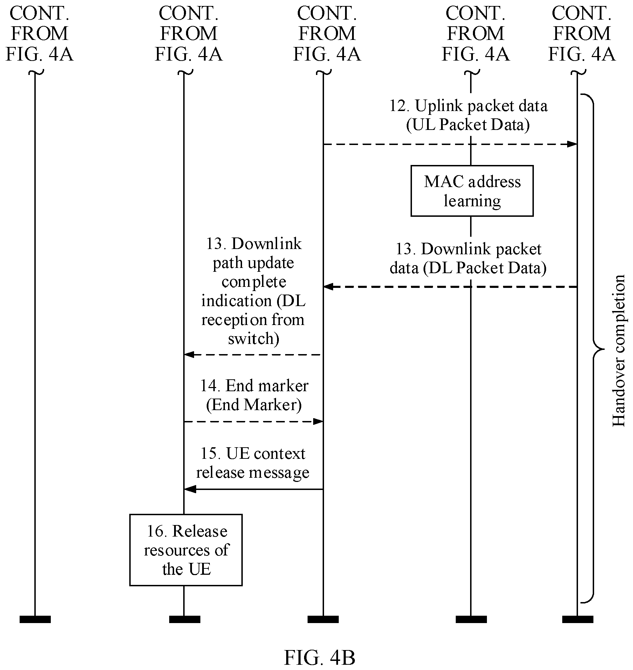

FIG. 4A and FIG. 4B are a schematic flowchart of a second embodiment of the handover method in the extremely simplified network architecture according to this application. As shown in FIG. 4A and FIG. 4B, the second embodiment and the first embodiment mainly differ in the following aspects.

405: The source base station sends an SN Status Transfer to the target base station, and starts to forward data to the target base station, where the data is forwarded by reusing a manner in which forwarding is performed by using a GTP (General Packet Radio Service Tunnelling Protocol, GTP for short) tunnel in current LTE.

The SN Status Transfer includes transmission statuses of PDCP SDUs, including a PDCP SDU in uplink transmission and a PDCP SDU in downlink transmission, corresponding to each SN.

First, the UE receives the handover command, synchronizes with the target base station, and initiates a random access process. Then, the UE receives an RAR message sent by the target base station, and obtains an uplink grant and TA. Then, the UE sends an RRC reconfiguration complete message to the target base station, and may start to transmit uplink data.

Finally, the target base station learns, by parsing the data packet of the UE or handover request signaling of the source base station, a source address and a destination address that correspond to the bearer of the data packet of the UE. After receiving an RRC reconfiguration complete message sent by the UE, the target base station generates an uplink path update data packet, and sends the data packet to an external network, for path updating.

The uplink path update data packet may be an ARP packet, a broadcast packet, a unicast packet, or the like of an Ethernet. The source address is a MAC address of the UE, and the destination address is a destination MAC address corresponding to the bearer of the data packet.

416: The target base station learns, by parsing the data packet of the UE or the handover request signaling of the source base station, the source address and the destination address that correspond to the bearer of the data packet of the UE, generates the uplink path update data packet after receiving the RRC reconfiguration complete message sent by the UE, and sends the data packet to the switch network, for path updating.

The target base station learns, by parsing the data packet of the UE or the handover request signaling of the source base station, a source MAC address and a destination MAC address that correspond to the bearer of the data packet of the UE, and then sends the generated uplink path update data packet to the switch network based on the source MAC address and the destination MAC address. The switch network completes path updating based on the "uplink path update data packet" sent by the target base station.

The uplink path update data packet may be an ARP packet, a broadcast packet, a unicast packet, or the like of an Ethernet. The source address is a MAC address of the UE, and the destination address is a destination MAC address corresponding to the bearer of the data packet.

Step 305 performed by the source base station in the first embodiment is replaced by step 405, and step 316 performed by the target base station in the first embodiment is replaced by step 416, so that the second embodiment of the handover method in the extremely simplified network architecture provided in this application may be obtained. Other steps are all the same as those in the first embodiment. Details are not described herein again.

Compared with the conventional technology, the second embodiment provides a new network architecture in which a user plane anchor is removed, so that a data transmission latency is reduced. In addition, a distributed handover solution without a user plane anchor in the new network architecture is designed, so that the UE actively sends an uplink user plane message such as the "uplink service data packet" or the "uplink path update data packet" after the path switching is completed, to help the switch network complete the downlink path updating. In addition, hitless switching is completed by using the path update indication information of the target base station and the end maker that is based on the timer of the source base station, to avoid a packet loss at the source base station.

Compared with the first embodiment, in the second embodiment, the target base station, instead of the UE, sends, to the switch network, the uplink user plane message used for path updating. In this embodiment, air interface overheads caused when the UE actively sends the uplink user plane message used for path updating in the switch network are reduced.

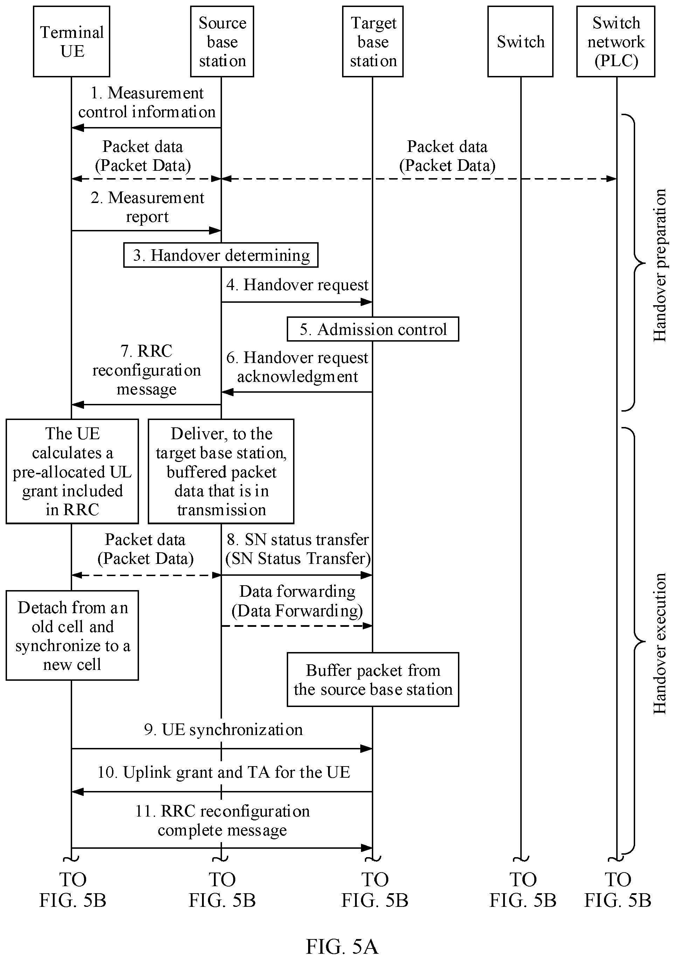

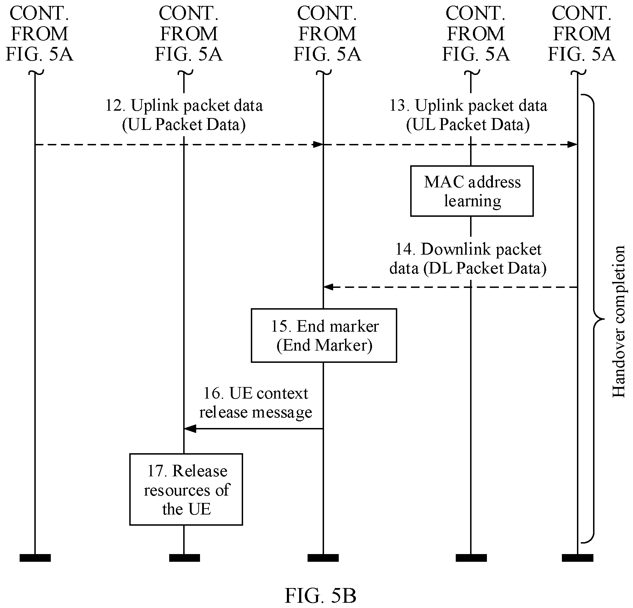

FIG. 5A and FIG. 5B are a schematic flowchart of a third embodiment of the handover method in the extremely simplified network architecture according to this application. As shown in FIG. 5A and FIG. 5B, the third embodiment and the first embodiment mainly differ in the following aspects.

506: The source base station releases related resources of the UE based on a UE context release message sent by the target base station.

A switch network completes path updating based on the "uplink service data packet" or the "uplink path update data packet" forwarded by the target base station. The downlink data packet is directly sent to the target base station through a new path. When receiving the downlink data packet sent by using the switch network, the target base station starts a timer, and after the timer expires, it is considered that downlink data path updating is completed.

Optionally, the timer may be a set time threshold, and the time threshold may be an empirical value. When the timer expires, it may be considered that sending of the data forwarded by the source base station to the target base station is completed.

Optionally, the timer may include a trigger structure. If new downlink data forwarded by the source base station arrives in the target base station in a timer starting process, the timer may be restarted.

It should be understood that, during actual application, another manner may also be used to determine whether sending of the forwarded data is completed. A specific manner is not limited herein.

517: The switch network completes path updating based on an uplink data packet. The downlink data packet is directly sent to the target base station through the new path. When receiving the downlink data packet sent by using the switch network, the target base station starts the timer, and after the timer expires, it is considered that the downlink data path updating is completed.

Optionally, the timer may be the set time threshold, and the time threshold may be an empirical value. When the timer expires, it may be considered that sending of the data forwarded by the source base station to the target base station is completed.

Optionally, the timer may include the trigger structure. If new downlink data forwarded by the source base station arrives in the target base station in the timer starting process, the timer may be restarted.

It should be understood that, during actual application, another manner may also be used to determine whether sending of the forwarded data is completed. A specific manner is not limited herein.

Step 306 performed by the source base station in the first embodiment is replaced by step 506, step 307 is removed, and step 317 performed by the target base station in the first embodiment is replaced by step 517, so that the third embodiment of the handover method in the extremely simplified network architecture provided in this application may be obtained. Other steps are all the same as those in the first embodiment. Details are not described herein again.

Compared with the conventional technology, an advantage of the third embodiment is roughly the same as that of the first embodiment and that of the second embodiment.

Compared with the first embodiment, in the third embodiment, the target base station does not send the path update indication information to the source base station, and the source base station does not need to start the timer and send the end maker to the target base station after the timer expires. Instead, the target base station starts the timer, to determine whether forwarding of the data packet of the source base station is completed. In this embodiment, overheads of information exchange between the source base station and the target base station are reduced.

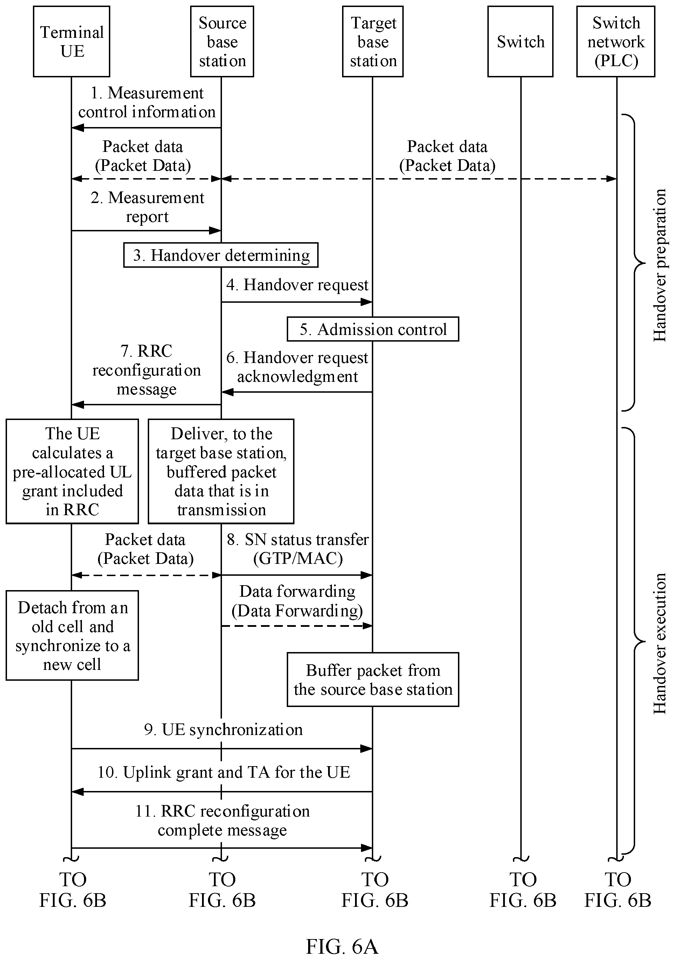

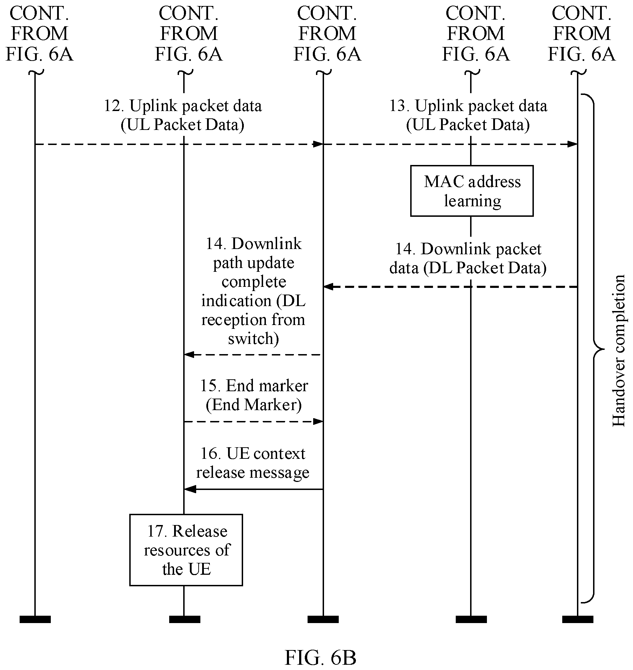

FIG. 6A and FIG. 6B are a schematic flowchart of the handover method in the extremely simplified network architecture according to this application. As shown in FIG. 6A and FIG. 6B, this embodiment and the embodiment shown in FIG. 3A and FIG. 3B mainly differ in the following aspects.

605: The source base station sends an SN Status Transfer to the target base station, and starts to forward data to the target base station, where the data may be directly forwarded by using a MAC address.

The SN Status Transfer includes transmission statuses of PDCP SDUs, including a PDCP SDU in uplink transmission and a PDCP SDU in downlink transmission, corresponding to each SN.

The method of forwarding the data by using the MAC address is roughly as follows: The source base station may obtain a MAC address of the target base station when a network is initialized. When forwarding the data to the target base station, the source base station encapsulates the data packet of the UE into an Ethernet data packet, adds an Ethernet header, sets a source address to a MAC address of the source base station and a destination address to a MAC address of the target base station, and forwards the data packet based on the source MAC address and the destination MAC address.

The obtaining a MAC address of the target base station when a network is initialized includes obtaining the MAC address through a port between a core network and a base station, or includes obtaining the MAC address by using signaling of a communication interface between base stations.

It should be understood that a type of a bearer of a data packet (an IP packet or a GTP packet) or a type of QoS information may be forwarded based on the MAC address.

Optionally, a type of a forwarding tunnel (a GTP-U tunnel or a MAC tunnel) may further be determined through negotiation in the process in which the source base station sends the handover request to the target base station.

Optionally, the type of the forwarding tunnel may be alternatively determined through configuration performed by using a control node of a core network.

After the type of the forwarding tunnel is determined, the following operations need to be performed.

First, the UE receives the handover command, synchronizes with the target base station, and initiates a random access process. Then, the UE receives an RAR message sent by the target base station, and obtains an uplink grant and TA. Then, the UE sends an RRC reconfiguration complete message to the target base station, and may start to transmit uplink data. Finally, the UE performs path updating by using an uplink service data packet. When there is no uplink service data packet, the UE generates an uplink path update data packet, and sends the uplink path update data packet to the target base station together with the RRC reconfiguration complete message.

The uplink path update data packet may be an ARP packet, a broadcast packet, a unicast packet, or the like of an Ethernet.

Optionally, the uplink path update data packet may alternatively be sent to the target base station after the RRC reconfiguration complete message is sent.

614. The target base station receives the SN Status Transfer sent by the source base station, and starts to receive the data forwarded by the source base station, where the data may be directly forwarded by using the MAC address.

The SN Status Transfer includes transmission statuses of PDCP SDUs, including a PDCP SDU in uplink transmission and a PDCP SDU in downlink transmission, corresponding to each SN.

The method of forwarding the data by using the MAC address is roughly as follows: The source base station may obtain the MAC address of the target base station when the network is initialized. When forwarding the data to the target base station, the source base station encapsulates the data packet of the UE into the Ethernet data packet, adds the Ethernet header, sets the source address to the MAC address of the source base station and the destination address to the MAC address of the target base station, and forwards the data packet based on the source MAC address and the destination MAC address.

The obtaining the MAC address of the target base station when the network is initialized includes obtaining the MAC address through the port between the core network and the base station, or includes obtaining the MAC address by using signaling of the communication interface between the base stations.

It should be understood that the MAC address may be used to forward a type of a bearer of a data packet (an IP packet or a GTP packet) or a type of QoS information.

Optionally, the type of the forwarding tunnel (a GTP-U tunnel or a MAC tunnel) may further be determined through negotiation in the process in which the source base station sends the handover request to the target base station.

Optionally, the type of the forwarding tunnel may be alternatively determined through configuration performed by using the control node of the core network.

After the type of the forwarding tunnel is determined, the following operations need to be performed.

The UE receives the handover command, synchronizes with the target base station, and initiates the random access process.

Step 305 performed by the source base station in the first embodiment is replaced by step 605, and step 314 performed by the target base station in the first embodiment is replaced by step 614, so that the fourth embodiment of the handover method in the extremely simplified network architecture provided in this application may be obtained. Other steps are all the same as those in the first embodiment. Details are not described herein again.

Compared with the conventional technology, an advantage of the fourth embodiment is roughly the same as that of the first embodiment.

Compared with the first embodiment, in the fourth embodiment, inter-station data forwarding is performed by using the MAC tunnel instead of the GTP-U tunnel. Because processing is directly performed by using a layer-2 network, a processing latency can be reduced.

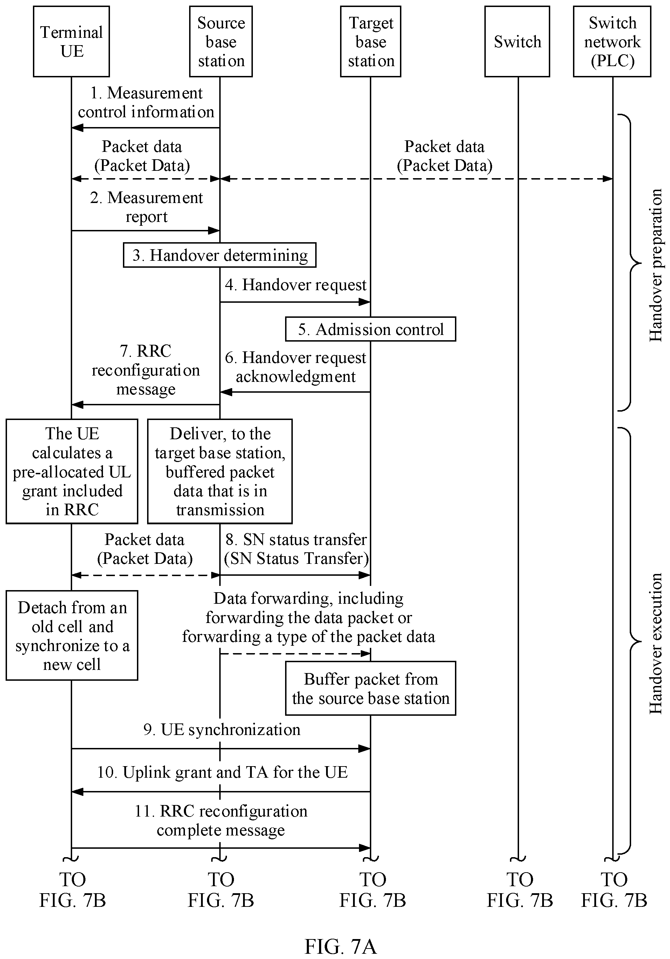

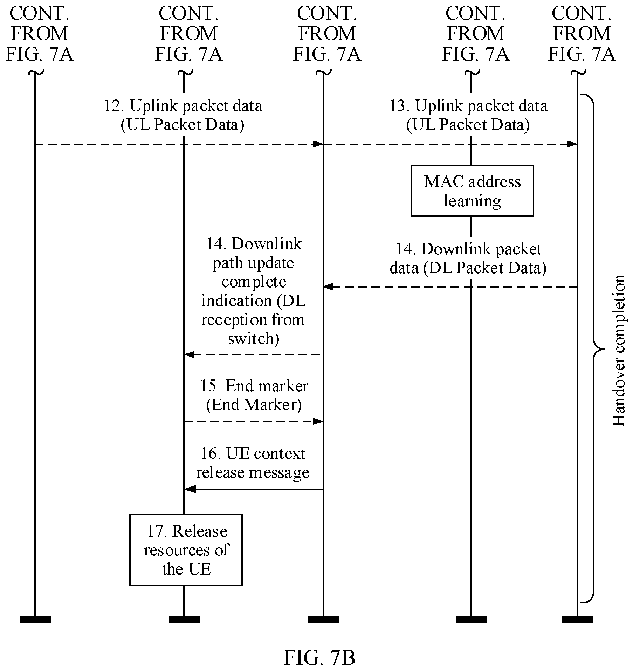

Further, FIG. 7A and FIG. 7B are a schematic flowchart of a fifth embodiment of the handover method in the extremely simplified network architecture according to this application. As shown in FIG. 7A and FIG. 7B, compared with the first embodiment, the fifth embodiment mainly has the following improvements.

706: The source base station indicates a type of the forwarded data packet, to enable the target base station to determine the type of the data packet.

Optionally, a packet header encapsulated in the forwarded data packet may indicate the type of the data packet, for example, a MAC-type data packet or an IP-type data packet.

Optionally, in configuration information of bearers of the data packet that includes the handover request sent by the source base station to the target base station, the type of the data packet may be determined by using configuration information of the UE. The configuration information of the UE is, for example, data packet type indication information or header compression information.

Optionally, the type of the data packet may be determined by using the QoS information in the configuration information of the bearers of the data packet.

Optionally, the type of the data packet may be determined through configuration performed by using a control node of a core network.

Step 706 is inserted between step 305 and step 306 that are performed by the source base station in the first embodiment, so that the fifth embodiment of the handover method in the extremely simplified network architecture provided in this application may be obtained. Other steps are all the same as those in the first embodiment. Details are not described herein again.

Compared with the conventional technology, an advantage of the fifth embodiment is roughly the same as that of the first embodiment.

Compared with the first embodiment, in the fifth embodiment, the step in which the source base station indicates the type of the data packet is added, so that the target base station can determine the type of the forwarded data packet and perform corresponding parsing, thereby avoiding blind detection performed by the target base station, and improving data transmission efficiency.

A difference between the first embodiment and the second embodiment is that execution bodies for uplink path updating are different. In the first embodiment, the execution body is the UE. In the second embodiment, the execution body is the target base station. A difference between the first embodiment and the third embodiment is that execution bodies for indicating that forwarding of the downlink data packet is completed are different. In the first embodiment, the execution body is the source base station. In the third embodiment, the execution body is the target base station. A difference between the first embodiment and the fourth embodiment is that the tunnels for inter-station data forwarding are different. In the first embodiment, the tunnel is the GTP tunnel. In the fourth embodiment, the tunnel is the MAC tunnel, or the tunnel whose type is determined through negotiation, or the tunnel whose type is determined through configuration performed by using the control node of the core network. A difference between the fifth embodiment and the first embodiment is that the step in which the source base station indicates the type of the data packet is added, so that the target base station can determine the type of the forwarded data packet and perform corresponding parsing, thereby avoiding the blind detection in the first embodiment. The third embodiment may be combined with the second embodiment to form a new embodiment. The fourth embodiment may be combined with the second embodiment to form a new embodiment. The fourth embodiment may be combined with the third embodiment to form a new embodiment. The fourth embodiment may be combined with the third embodiment and the second embodiment to form a new embodiment. The fifth embodiment may be combined with any one of the foregoing embodiments or any combination of the foregoing embodiments to form a new embodiment.

In addition to the data communication method, this application further provides a composite network architecture. The composite network architecture includes not only the new extremely simplified network architecture in which the user plane anchor is removed and that is provided in this application, but also an original network architecture, including the user plane anchor, in the conventional technology. The new architecture and the original architecture may be indicated by using indication information.

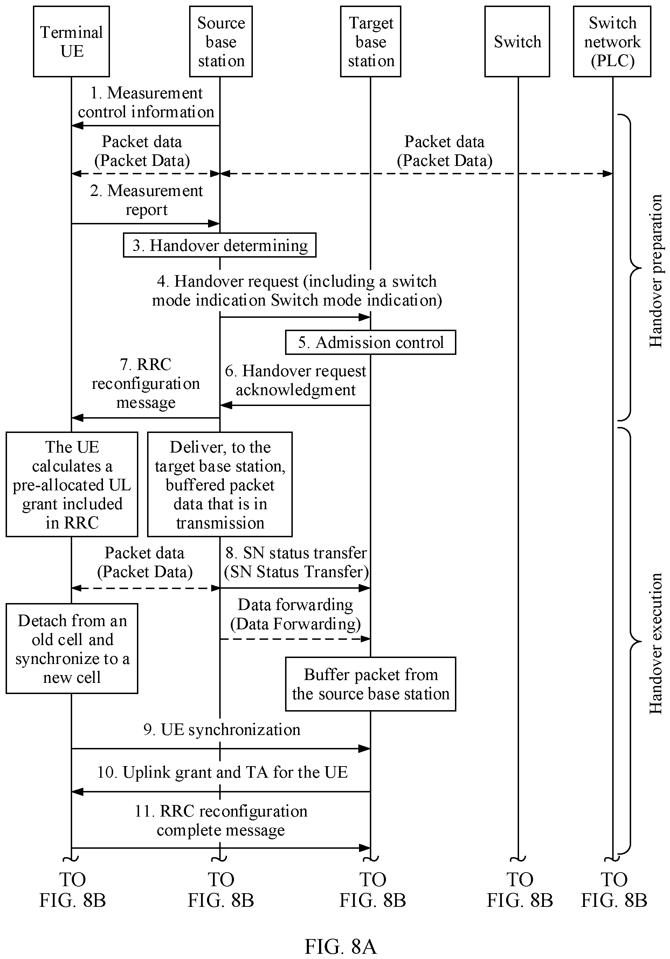

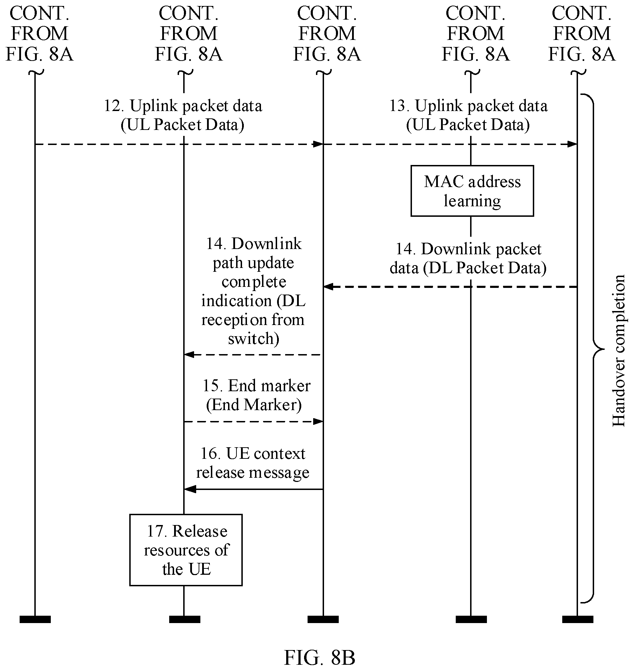

FIG. 8A and FIG. 8B are a schematic diagram of a sixth embodiment of a composite network architecture according to this application.

804: The source base station sends a handover request to a target base station, where the handover request includes some configuration information for a bearer of an Ethernet data packet.

The data packet may be an Ethernet data packet or an IP network data packet, and is related to a type of an external network to which the data packet is to be transmitted.

The configuration information includes but is not limited to quality of service (Quality of Service, QoS for short) information, a UE local area network address (Media Access Control Address, MAC for short), indication information (for example, a packet data convergence protocol (Packet Data Convergence Protocol, PDCP for short) header compression algorithm) of an Ethernet data bearer, an Ethernet protocol type corresponding to an Ethernet data bearer, and the like.

The configuration information further needs to include switch mode indication information that is used to indicate whether the new extremely simplified network architecture without the user plane anchor or the original architecture including the user plane anchor in the conventional technology is used for path updating in a subsequent step.

The target base station performs admission control based on QoS information in configuration information of each bearer and resources of the target base station, and determines to accept the handover request. Then, the target base station sends a handover acknowledgment message to the source base station, where the handover acknowledgment message carries the handover command.

813: The target base station sends the handover acknowledgment message to the source base station, where the handover acknowledgment message carries the handover command and handover mode acknowledgment information.

The target base station selects a corresponding network architecture based on the switch mode indication information sent by the source base station, and sends the handover mode acknowledgment information to the source base station.

The source base station transparently sends the handover command and the handover mode acknowledgment information to the UE by using the RRC reconfiguration message.

The sixth embodiment further includes the following steps.

805: The source base station performs configuration by using a control node of a core network, and determines whether the new extremely simplified network architecture without the user plane anchor or the original architecture including the user plane anchor in the conventional technology is used for path updating in the subsequent step.

814: The target base station performs configuration by using the control node of the core network, and determines whether the new extremely simplified network architecture without the user plane anchor or the original architecture including the user plane anchor in the conventional technology is used for path updating in the subsequent step.

Step 304 performed by the source base station in the first embodiment is replaced by step 804, and step 313 performed by the target base station in the first embodiment is replaced by step 813, so that the sixth embodiment of the handover method in the extremely simplified network architecture provided in this application may be obtained. Optionally, step 805 is inserted between step 305 and step 306 that are performed by the source base station in the first embodiment, and step 814 is inserted between step 313 and step 314 that are performed by the source base station in the first embodiment, so that the sixth embodiment of the handover method in the extremely simplified network architecture provided in this application may be obtained. Other steps are all the same as those in the first embodiment. Details are not described herein again.

Compared with the conventional technology and the first embodiment, in the sixth embodiment, different network architecture handover modes may be actively selected, so that the cellular network can flexibly cope with various application scenarios.

In addition to the new extremely simplified network architecture without the user plane anchor and the composite network architecture that are provided in the foregoing embodiment, the new extremely simplified network architecture may alternatively be implemented in a manner in which the user plane anchor SGW and the target base station are jointly deployed. When the SGW and the target base station are jointly deployed, the handover solution process in the foregoing embodiment does not change.

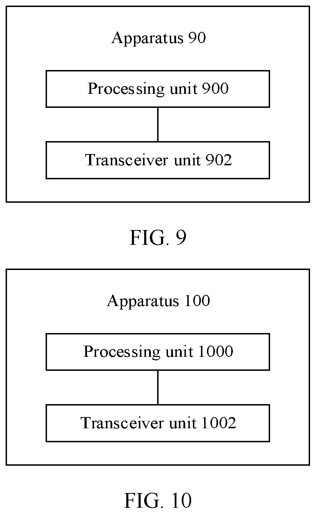

The foregoing describes in detail the related embodiments of the handover method in the extremely simplified network architecture provided in this application with reference to FIG. 2A to FIG. 8B. The following describes apparatuses related to the embodiments of this application with reference to FIG. 9 and FIG. 10. The technical features described in the foregoing method embodiments are also applicable to the following apparatus embodiments.

Corresponding to that the handover method in the extremely simplified network architecture is performed by the source base station, an embodiment of this application provides a handover apparatus. The handover apparatus may be the source base station. FIG. 9 shows a structure of the handover apparatus 90. The apparatus 90 may include at least:
a processing unit 900, configured to: after a terminal device is handed over to a first base station, and the first base station receives data sent by a switch, generate second indication information, where the second indication information is used to indicate a second base station to stop receiving the data sent by the switch; and
a transceiver unit 902, configured to: send the second indication information to the second base station; and send, to the terminal device based on a feedback acknowledgment of the second base station for the second indication information, the data sent by the switch.

Further, the processing unit is configured to generate first indication information, where the first indication information is used to indicate that the terminal device is handed over to the first base station; and
the transceiver unit is further configured to send the first indication information to the switch.

Further, the processor is configured to determine, based on identification information of the terminal device, to send data of the terminal device to the switch; and
the transceiver unit is further configured to: receive the data of the terminal device; and send the data of the terminal device to the switch.

Further, the processor is configured to obtain, based on identification ID information of the terminal device, a MAC address that is of the terminal device and that corresponds to the identification information of the terminal device.

Further, the processor is specifically configured to establish a routing table based on the MAC address of the terminal device, where the routing table includes a correspondence between the MAC address of the terminal device and a destination MAC address of the first base station.

An embodiment of this application further provides a communications apparatus. The apparatus 100 includes:
a processing unit 1000, configured to: when a terminal device is handed over to a first base station, obtain first indication information, where the first indication information is used to indicate that the terminal device is handed over to the first base station; and
a transceiver unit 1002, configured to send data to the first base station.

Further, the transceiver unit is further configured to receive data of the terminal device.

The processing unit is further configured to obtain, based on identification ID information of the terminal device, a MAC address that is of the terminal device and that corresponds to the identification information of the terminal device.

Further, the processing unit is further configured to establish a routing table based on the MAC address of the terminal device, where the routing table includes a correspondence between the MAC address of the terminal device and a destination MAC address of the first base station.

This application provides a computer-readable storage medium. The computer-readable storage medium stores instructions. When the instructions are run on a computer, the computer is enabled to perform the method according to any one of the foregoing embodiments.

This application provides a chip, including a memory and a processor. The memory is configured to store a computer program, and the processor is configured to invoke the computer program from the memory and execute the computer program, to perform the method according to any one of the foregoing embodiments.

Optionally, the chip may alternatively include only a processor. The processor is configured to read and execute a computer program stored in a memory. When the computer program is executed, the processor performs the method according to any one of the foregoing embodiments.

This application further provides a computer program product. The computer program product includes computer program code. When the computer program code is run on a computer, the computer is enabled to perform the method according to any one of the foregoing embodiments.

Optionally, the memory and the processor may be physically independent units, or the memory and the processor may be integrated together.

## Claims

1. A data communication method, wherein the method comprises:
after a terminal device is handed over to a first base station, and the first base station receives data sent by a switch, generating, by the first base station, second indication information, wherein the second indication information is used to indicate a second base station to stop receiving the data sent by the switch;
sending, by the first base station, the second indication information to the second base station; and
after receiving a feedback acknowledgment of the second base station for the second indication information, sending, by the first base station to the terminal device, the data sent by the switch.

2. The method according to claim 1, wherein the method further comprises:
generating, by the first base station, first indication information, wherein the first indication information is used to indicate that the terminal device is handed over to the first base station; and
sending, by the first base station, the first indication information to the switch.

3. The method according to claim 1, wherein the method further comprises:
receiving, by the first base station, related data of the terminal device;
determining, by the first base station based on identification information of the terminal device, to send the related data of the terminal device to the switch; and
sending, by the first base station, the related data of the terminal device to the switch.

4. The method according to claim 1, wherein the method further comprises:
obtaining, by the first base station based on identification ID information of the terminal device, a MAC address that is of the terminal device and that corresponds to the identification information of the terminal device.

5. The method according to claim 4, wherein the method further comprises:
establishing, by the first base station, a routing table based on the MAC address of the terminal device, wherein the routing table comprises a correspondence between the MAC address of the terminal device and a destination MAC address of the first base station.

6. A data communication method, wherein the method comprises:
when a terminal device is handed over to a first base station, obtaining, by a switch, first indication information, wherein the first indication information is used to indicate that the terminal device is handed over to the first base station; and
sending, by the switch, data to the first base station.

7. The method according to claim 6, wherein the method further comprises:
receiving, by the switch, data of the terminal device.

8. The method according to claim 1, wherein the method further comprises:
obtaining, by the switch based on identification ID information of the terminal device, a MAC address that is of the terminal device and that corresponds to the identification information of the terminal device.

9. The method according to claim 8, wherein the method further comprises:
establishing, by the switch, a routing table based on the MAC address of the terminal device, wherein the routing table comprises a correspondence between the MAC address of the terminal device and a destination MAC address of the first base station.

10. A communications apparatus, wherein the apparatus comprises:
a processing unit, configured to: after a terminal device is handed over to a first base station, and the first base station receives data sent by a switch, generate second indication information, wherein the second indication information is used to indicate a second base station to stop receiving the data sent by the switch; and
a transceiver unit, configured to: send the second indication information to the second base station; and send, to the terminal device based on a feedback acknowledgment of the second base station for the second indication information, the data sent by the switch.

11. The apparatus according to claim 10, wherein the processing unit is further configured to generate first indication information, wherein the first indication information is used to indicate that the terminal device is handed over to the first base station; and
the transceiver unit is further configured to send the first indication information to the switch.

12. The apparatus according to claim 10, wherein the processor is further configured to determine, based on identification information of the terminal device, to send data of the terminal device to the switch; and
the transceiver unit is further configured to: receive the data of the terminal device; and send the data of the terminal device to the switch.

13. The apparatus according to claim 10, wherein the processor is further configured to obtain, based on identification ID information of the terminal device, a MAC address that is of the terminal device and that corresponds to the identification information of the terminal device.

14. The apparatus according to claim 13, wherein the processor is specifically configured to establish a routing table based on the MAC address of the terminal device, wherein the routing table comprises a correspondence between the MAC address of the terminal device and a destination MAC address of the first base station.

15. A communications apparatus, wherein the apparatus comprises:
a processing unit, configured to: when a terminal device is handed over to a first base station, obtain first indication information, wherein the first indication information is used to indicate that the terminal device is handed over to the first base station; and
a transceiver unit, configured to send data to the first base station.

16. The apparatus according to claim 15, wherein the transceiver unit is further configured to receive data of the terminal device.

17. The apparatus according to claim 15, wherein the processing unit is further configured to obtain, based on identification ID information of the terminal device, a MAC address that is of the terminal device and that corresponds to the identification information of the terminal device.

18. The apparatus according to claim 17, wherein the processing unit is further configured to establish a routing table based on the MAC address of the terminal device, wherein the routing table comprises a correspondence between the MAC address of the terminal device and a destination MAC address of the first base station.

19. A computer-readable storage medium, wherein the computer-readable storage medium stores instructions, and when the instructions are run on a computer, the computer is enabled to perform the method according to any one of claims 1 to 5 or the method according to any one of claims 6 to 9.

20. A chip, comprising:
a memory, configured to store a computer program; and
a processor, configured to read and execute the computer program stored in the memory, wherein when the computer program is executed, the processor performs the method according to any one of claims 1 to 5 or the method according to any one of claims 6 to 9.
